# EUROPEAN PATENT APPLICATION

(11) **EP 4 667 195 A1**
(43) Date of publication of application: **24.12.2025**
(21) Application number: 25165333.3
(22) Date of filing: 21.03.2025
(51) Int. Cl.: B29C 70/02, F01D 5/28, F01D 5/14, B29C 70/08

(54) **COMPOSITE ARTICLE WITH BARRIER LAYER**

(30) Priority: 21.06.2024 US 202463662703 P
(71) Applicant: RTX Corporation, Farmington, CT 06032 (US)
(72) Inventor: BLACK, Andrew Carl, Palm Bay, 32909 (US)
(74) Representative: Dehns

(57) **Abstract**

A method for forming a composite article includes: mating a polymeric barrier (54) with a fiber scrim (52); applying a first layer (58) to a tool (400); applying the mated polymeric barrier (54) and fiber scrim (52) atop the first layer (58); and applying multiple further fiber layers (56) atop the mated polymeric barrier (54) and fiber scrim (52).

## Description

### BACKGROUND

The disclosure relates to gas turbine engines. More particularly, the disclosure relates to fiber composite vanes.

Gas turbine engines (used in propulsion and power applications and broadly inclusive of turbojets, turboprops, turbofans, turboshafts, industrial gas turbines, and the like) may feature fiber composite components such as vanes. Example fiber composites are carbon fiber composites. Example vanes are formed in singlets or in clusters such as doublets and triplets. Typical vanes are formed with inner diameter (ID) platforms or inner shrouds and outer diameter (OD) shrouds or outer shrouds.

Some example fiber composite vanes include barrier layers formed in the original molding of the composite. For example, a polymeric sheet may, at least locally, form an outermost layer of the composite. In an example layer buildup, the polymeric sheet may be placed into a mold prior to placing fiber sheets. The fiber material may be in sheet or tape or tow form depending upon the implementation and may be in prepreg form. If not in prepreg form, matrix precursor (e.g., epoxy) may be added at any of several stages.

An example fluoroelastomer is sold in sheet form as Viton^{™} fluoroelastomer of The Chemours Company FC, LLC, Wilmington Delaware. In one example, the fluoroelastomer is first applied to a scrim (e.g., glass fiber). For example, uncured Viton fluoroelastomer sheet and a glass fiber scrim are placed on a flat plate. Vacuum is applied and then the combination is oven cured. That fully cures the fluoroelastomer and provides adhesion to the glass scrim.

The fluoroelastomer/glass sheet is cut to shape and applied to the mold tool (e.g., with the fluoroelastomer side facing/contacting the metallic tool), followed by the subsequent carbon prepreg plies in order to build up the vane stacks. The tooling is then assembled, closed, injected (e.g., with an additional increment of matrix-former beyond the prepreg), and cured.

### SUMMARY

One aspect of the disclosure involves a vane comprising: an airfoil having a pressure side and a suction side; a fiber composite substrate; and a polymeric barrier. An additional fiber layer is atop the polymeric barrier.

In a further example of any of the foregoing, additionally and/or alternatively, the fiber composite substrate and the additional fiber layer comprise carbon fiber.

In a further example of any of the foregoing, additionally and/or alternatively: the fiber composite substrate is carbon fiber and the and the additional fiber layer is not carbon fiber.

In a further example of any of the foregoing, additionally and/or alternatively, the barrier comprises fluoroelastomer sheet.

In a further example of any of the foregoing, additionally and/or alternatively, the polymeric barrier is on a fiber scrim.

In a further example of any of the foregoing, additionally and/or alternatively, the fiber scrim is a glass fiber scrim and the scrim is interior of the polymeric barrier.

In a further example of any of the foregoing, additionally and/or alternatively, the fiber scrim and the polymeric barrier are coextensive.

In a further example of any of the foregoing, additionally and/or alternatively, the polymeric barrier covers at least 50% of the pressure side.

In a further example of any of the foregoing, additionally and/or alternatively, the polymeric barrier covers no more than 95% of the pressure side.

In a further example of any of the foregoing, additionally and/or alternatively, the additional fiber layer fully covers the polymeric barrier.

In a further example of any of the foregoing, additionally and/or alternatively, the additional fiber layer only partially covers the polymeric barrier.

In a further example of any of the foregoing, additionally and/or alternatively, the additional fiber layer extends from a leading edge of the polymeric barrier to a trailing edge of the polymeric barrier.

A further aspect of the disclosure involves a gas turbine engine including the vane and further comprising: a plurality of further vanes end-to-end therewith to form a ring.

A further aspect of the disclosure involves a method for manufacturing the vane, the method comprising: mating the polymeric barrier with a fiber scrim; applying the additional fiber layer to a tool; applying the mated polymeric barrier and fiber scrim atop the additional fiber layer; and applying multiple further fiber layers atop the mated polymeric barrier and fiber scrim for forming the fiber composite substrate.

A further aspect of the disclosure involves a method for using the vane, the method comprising removing the additional fiber layer to expose the polymeric barrier.

A further aspect of the disclosure involves a method for forming a composite article, the method comprising: mating a polymeric barrier with a fiber scrim; applying a first layer to a tool; applying the mated polymeric barrier and fiber scrim atop the first layer; and applying multiple further fiber layers atop the mated polymeric barrier and fiber scrim.

In a further example of any of the foregoing, additionally and/or alternatively, the first layer is a fiber-free pre-formed resin sheet.

In a further example of any of the foregoing, additionally and/or alternatively, the first layer is a fiber layer.

In a further example of any of the foregoing, additionally and/or alternatively: the fiber scrim is a glass fiber scrim; the barrier comprises a fluoroelastomer sheet; and the further fiber layers and the first layer comprise carbon fiber prepregs.

In a further example of any of the foregoing, additionally and/or alternatively, the first layer's carbon fiber prepreg has higher resin content than the further fiber layers' prepregs.

In a further example of any of the foregoing, additionally and/or alternatively: the composite article has an airfoil having a pressure side and a suction side; and the polymeric barrier covers at least 50% of the pressure side.

In a further example of any of the foregoing, additionally and/or alternatively: the composite article is a vane; and the first layer fully covers the polymeric barrier.

In a further example of any of the foregoing, additionally and/or alternatively: the composite article is a vane; and the first layer only partially covers the polymeric barrier.

In a further example of any of the foregoing, additionally and/or alternatively, the first layer comprises a plurality of spaced apart pieces over a single polymeric barrier and scrim, optionally the pieces being streamwise strips on a pressure side of an airfoil.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a view of a vane doublet.
FIG. 2 is a pressure side view of the doublet.

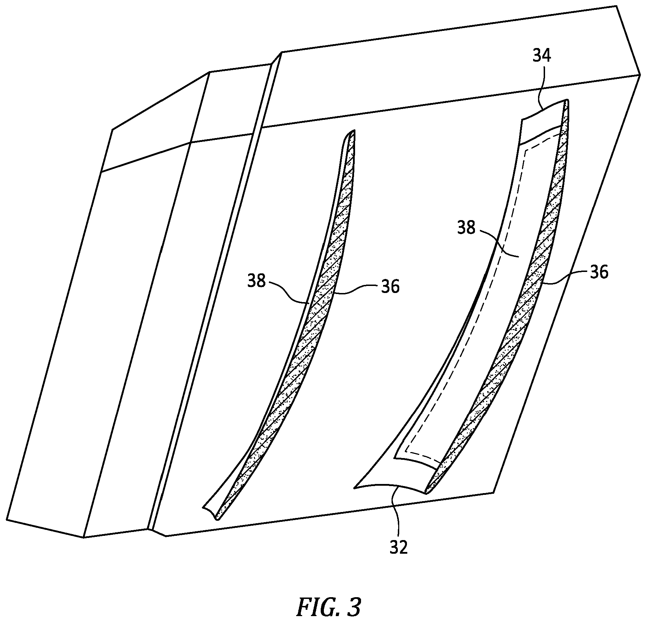

FIG. 3 is a sectional view of the doublet taken along line 3-3 of FIG. 2.
FIG. 4 is a partial sectional view of a mold.

Like reference numbers and designations in the various drawings indicate like elements.

### DETAILED DESCRIPTION

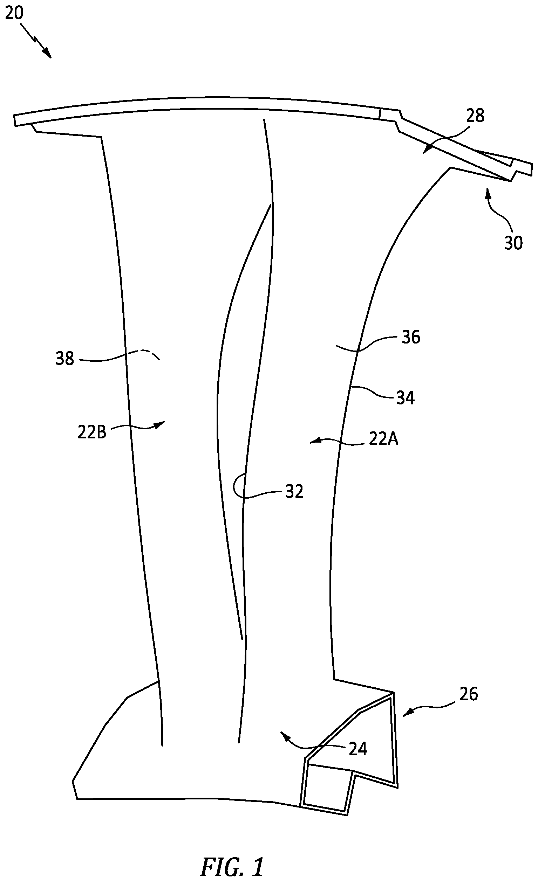

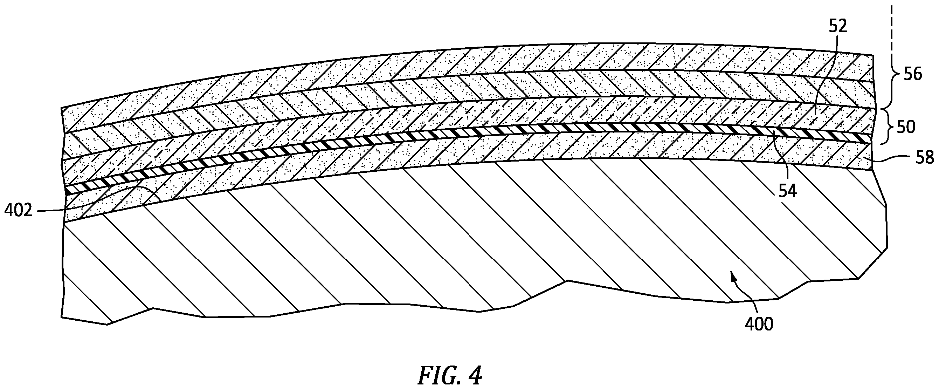

FIG. 1 shows a fiber composite vane cluster 20 as an example doublet having a pair of airfoils 22A, 22B. Each airfoil extends from an inner diameter (ID) end 24 at a common/shared platform 26 to an outer diameter (OD) end 28 at a common/shared shroud (also often referred to as platform) 30. Each airfoil extends from a leading end/edge 32 to a trailing end/edge 34 and has a suction side 36 and a pressure side 38. As is discussed further below, the construction is of a multi-layer fiber composite layup. A layer at or near the suction side surface is a barrier layer 50 (FIG. 4) which comprises the integral combination of a fiber scrim 52 and a polymeric barrier material 54. In this example, the scrim forms one face of the barrier and the polymeric barrier material forms the other face. The scrim face faces inward into the many further layers 56 of the composite. The polymeric barrier material/layer 54 faces outward and is at least partially covered by a further fiber layer 58. The example further fiber layer may be of the same material as the main structural layers 56 (e.g., a woven carbon fiber sheet). The example scrim 52 and polymeric barrier material 54 footprints are coextensive. For example, the two may be bonded to each other as is conventional in the art in a larger sheet form and then cut to shape from the sheet. The scrim provides a clear benefit in handling and cutting/processing the polymer layer.

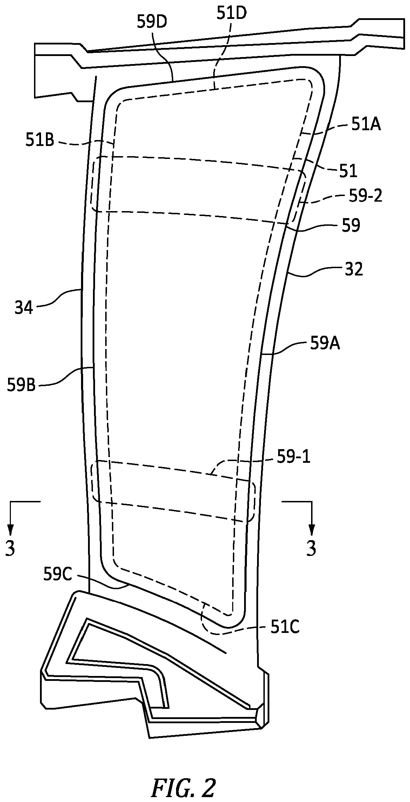

In this illustrated example, the barrier 50 covers a large portion of the pressure side of the airfoil (see perimeter 51 in FIG. 2). In this example, the barrier 50 is limited to the pressure side of the airfoil. In a prior art configuration, the layup in the mold/tool 400 (FIG. 4) may be subject to complications. For example, the barrier 50 may be placed directly against the tool with the polymeric barrier material 54 contacting the convex pressure side surface 402 of the airfoil section of the tool and the scrim 52 facing away therefrom. In that example, the remaining layers 56 of carbon fiber are subsequently applied atop the scrim. It is possible for the barrier 50 to become displaced during this process. This may be facilitated by relatively low adhesion and friction between the polymeric barrier material 54 and the mold surface 402. To reduce chances of such slippage, the additional fiber layer 58 may be placed in the mold/tool before the barrier 50 and may improve adhesion and reduce chances of movement. For example, the additional fiber layer may be a prepreg whose integral matrix precursor (e.g., uncured or partially cured matrix) may provide some adherence to the mold surface 402 and the polymeric barrier material 54 to reduce movement. Thus, a buildup may include first applying the additional fiber layer 58 to the mold/tool, then applying the barrier 50 atop the additional fiber layer in the mold/tool and then sequentially applying layers 56 of the main fiber material (e.g., also carbon fiber prepregs) atop the barrier 50 (e.g., initially directly atop the barrier 50 and subsequently atop each other). Depending upon the particular implementation (e.g., singlet versus doublet) it may include multiple separate layups in multiple separate mold/tool sections which are subsequentially assembled for injection of further matrix precursor (e.g., supplementing that of the prepreg) and curing. Example additional matrix precursor is an epoxy resin resin/hardener mixture. Example resin for the prepreg and the additional resin, if any, is a bismaleimide (BMI) resin. Example curing is via heat in an autoclave. One method common in the art is the sequential layup of composite prepreg layers and performing the molding in an autoclave. Another method, referred to as resin transfer molding (RTM), involves the injection of matrix precursor into a closed mold. These fibers may or may not be prepreg. The ingredients every process has in common are pressure, temperature, and resin/epoxy.

Thus, in the ultimate vane airfoils, the main layers 56 of the original layup form a fiber composite substrate with the barrier 50 atop the substrate (first the scrim 52 atop the substrate and then the polymeric barrier material 54 atop the scrim (although potentially partially infiltrating)), and then the additional fiber layer 58 atop the polymeric barrier material 54. In this context, it is seen that when describing the buildup direction in the mold/tool and when describing the ultimate layering in the depth-wise direction of the airfoil, the direction of "atop" becomes reversed.

The example footprint (shown by edge /perimeter 51) of the barrier 50 closely follows the footprint/perimeter of the pressure side and thus includes a leading segment/leg 51A spaced slightly downstream of the airfoil leading edge, a trailing segment/leg 51B spaced slightly upstream of the airfoil trailing edge, an ID segment/leg 51C spaced slightly outboard of the platform, and an OD segment/leg 51D spaced slightly inboard of the shroud.

The example additional layer footprint may fully or partially cover the barrier. In one group of examples, the additional layer fully covers the barrier (perimeter/edge 59 in FIG. 2) extending slightly closer to the airfoil leading and trailing edges with its respective leading 59A and trailing 59B legs and slightly closer to the platform and shroud with its ID 59C and OD 59D segments/legs, respectively. However, there may be wrap around such that the additional layer grabs onto the platform OD surface or shroud ID surface or wraps around the leading edge or trailing edge.

In one group of examples of reengineering from a baseline lacking the additional layer 58, the footprint of the barrier 50 may be shrunk slightly to provide a little more clearance at one to all of the leading edge, trailing edge, platform, and shroud to allow the additional layer footprint to fully overlap the barrier footprint without reaching said leading edge, trailing edge, platform, or shroud. In one particular example, therefore, the additional layer footprint may correspond to the footprint of the baseline barrier layer and the modified barrier layer footprint may be slightly shrunk/recessed relative to the baseline.

In operation, the additional layer 58 may be attritable or sacrificial. The attrition may occur during service such as by erosion. Or the additional layer may be removed prior to service. Removal may be facilitated by any of several mechanisms including less than total encapsulation of the barrier 50. For example, the additional fiber layer 58 may be formed as one or more pieces with less than full coverage of the barrier 50. This coverage may be merely sufficient to provide desired retention during lay up. For example, the additional material may be formed in multiple strips (alternatively shown in broken lines as 59-1 and 59-2) arrayed spanwise along the ultimate airfoil with gaps between strips. The strips may extend toward the leading edge and trailing edge past the associated edges of the barrier 50 or may not.

The attritability leads to several other possible asymmetries between the fiber prepegs of the additional fiber layer and the main substrate. For example, the main substrate may not pre prepreg while the additional layer is prepreg. This would allow the additional layer the ability to begin forming a bond to the main substrate before the addition of resin into the system. In this example, the mold may be exposed to heat for a significant length of time prior to the injection of resin into the system, this hold time would allow resin prepregged into the additional layer the ability to flow around the erosion coating and into the main substrate. The example just discussed would also function if the base substrate was prepreg, but to a lesser degree than the additional layer. For example, the additional layer could be impregnated with a larger resin content relative to the base material. An example is at least a 5.0 weight or volume percent more resin content than the base substrate prepreg. The percentage may be measured via resin ratio (e.g., an example prepreg is 45% resin by weight so the delta of 5% would yield a 50% resin ratio figure). Another asymmetry between the fiber prepregs and additional layer may also be the weave type and direction. The additional layer may be of a lower material grade (e.g., the fiber prepregs may be a high grade of carbon fiber like 12k or 24k, while the additional layer may be 1k). A lower grade material will be more cost effective and potentially easier to remove as it has lesser mechanical properties.

The matrix precursor of the additional fiber layer prepreg may be selected for uncured adhesion to the polymeric barrier material rather than for permanent robust bonding. The fiber of the additional fiber layer prepreg may be selected for ease of thermal or chemical removal without damaging remaining layers. It may be other than carbon fiber or a different carbon fiber than that of the base material. For example, a metallic foil could be used to secure the erosion coating during manufacturing but may be removed with an acidic solution. In addition, it may be advantageous to create a thin sheet of material out of the epoxy/resin used in the manufacturing process (e.g., without fiber or without carbon fiber). This would allow the extra material to secure the erosion coating while molding, but, depending on the resin, the extra layer may melt back into a liquid state. Regardless of the extra layer made out or resin "melting", it is desirable to have the extra layer be made out of the resin already in use as there would be no foreign materials introduced to the molding process.

In the particular non-limiting example cluster, the platform and shroud, in addition to their main gaspath surfaces (platform OD surface and shroud ID surface), have: suction side and pressure side circumferential ends; leading and trailing axial/longitudinal/streamwise ends; and outer radial faces (platform ID and shroud OD). In the particular illustrated example embodiment, the platforms are hollow structures and the airfoils and shrouds are not hollow. In the particular illustrated example, the platform pressure side end is narrowed in cross-section (e.g., in stepped form with tapering lead-in) to form a spigot which is received in a socket formed by the adjacent suction side end of the adjacent vane segment. The joined platforms thus form a structural platform ring. In distinction, the shroud suction side and pressure side ends are shaped to contact or closely abut when held by static case structure.

Although illustrated in the context of one particular vane cluster, other vane configurations and other non-vane articles with barrier coatings may find the use of the additional fiber layer beneficial.

Component materials and manufacture techniques and assembly techniques may be otherwise conventional. Additionally, variations on the additional layer 58 are discussed above.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. A vane comprising:
an airfoil (22A; 22B) having a pressure side (38) and a suction side (36);
a fiber composite substrate (56); and
a polymeric barrier (50; 54),
and further comprising:
an additional fiber layer (58) atop the polymeric barrier (50).

2. The vane of claim 1 wherein:
the fiber composite substrate (56) and the additional fiber layer (58) are carbon fiber.

3. The vane of claim 1 wherein:
the fiber composite substrate (56) is carbon fiber and the and the additional fiber layer (58) is not carbon fiber.

4. The vane of any preceding claim wherein:
the polymeric barrier (50; 54) comprises fluoroelastomer sheet.

5. The vane of any preceding claim wherein:
the polymeric barrier (54) is on a fiber scrim (52).

6. The vane of claim 5 wherein:
the fiber scrim (52) is a glass fiber scrim (52); and
the fiber scrim (52) is interior of the polymeric barrier (54).

7. The vane of claim 5 or 6 wherein:
the fiber scrim (52) and the polymeric barrier (54) are coextensive.

8. The vane of any preceding claim wherein:
the polymeric barrier (50; 54) covers at least 50% of the pressure side (38), optionally, wherein the polymeric barrier (50; 54) covers no more than 95% of the pressure side (38).

9. The vane of any preceding claim wherein:
the additional fiber layer (58) fully covers the polymeric barrier (50; 54).

10. The vane of any of claims 1 to 8 wherein:
the additional fiber layer (58) only partially covers the polymeric barrier (50; 54).

11. The vane of any preceding claim wherein:
the additional fiber layer (58) extends from a leading edge (59A) of the polymeric barrier (50; 54) to a trailing edge (59B) of the polymeric barrier (50; 54).

12. A gas turbine engine including the vane of any preceding claim and further comprising:
a plurality of further vanes end-to-end therewith to form a ring.

13. A method for manufacturing the vane of claims 1 to 11, the method comprising:
mating the polymeric barrier (54) with a fiber scrim (52);
applying the additional fiber layer (58) to a tool (400);
applying the mated polymeric barrier (54) and fiber scrim (52) atop the additional fiber layer (58); and
applying multiple further fiber layers (56) atop the mated polymeric barrier (54) and fiber scrim (52) for forming the fiber composite substrate.

14. A method for using the vane of any of claims 1 to 11, the method comprising:
removing the additional fiber layer (58) to expose the polymeric barrier (54).

15. A method for forming a composite article (20), the method comprising:
mating a polymeric barrier (54) with a fiber scrim (52);
applying a first layer (58) to a tool (400);
applying the mated polymeric barrier (54) and fiber scrim (52) atop the first layer (58); and
applying multiple further fiber layers (56) atop the mated polymeric barrier (54) and fiber scrim (52).
